# EUROPEAN PATENT SPECIFICATION

(11) **EP 3 722 699 B1**
(45) Date of publication and mention of the grant of the patent: **27.09.2023**
(21) Application number: 20166219.4
(22) Date of filing: 27.03.2020
(51) Int. Cl.: F24S 30/422

(54) **HORIZONTAL ROTATION DRIVING DEVICE FOR LARGE-SCALE HELIOSTAT**
ANTRIEBSVORRICHTUNG MIT HORIZONTALER ROTATION FÜR GROSSEN HELIOSTAT
DISPOSITIF D'ENTRAÎNEMENT DE ROTATION HORIZONTAL POUR HÉLIOSTAT À GRANDE ÉCHELLE

(30) Priority: 11.04.2019 CN 201910289796
(43) Date of publication of application: 14.10.2020
(73) Proprietor: Hangzhou Sino-Deutsch Power Transmission Equipment Co., Ltd, Hangzhou City Zhejiang (CN)
(72) Inventor: HONG, Song, Hangzhou City, Zhejiang (CN); JIANG, Li, Hangzhou City, Zhejiang (CN); LU, Jiake, Hangzhou City, Zhejiang (CN)
(74) Representative: Petraz, Gilberto Luigi

(56) References cited:
- EP-A1- 2 657 624
- EP-A1- 2 857 777
- WO-A1-2016/000895
- CN-A- 108 954 861
- CN-U- 206 889 679
- ES-A1- 2 658 390
- US-A- 6 123 067
- US-A1- 2011 162 685
- US-A1- 2013 333 690

## Description

### TECHNICAL FIELD

The present invention relates to a rotation driving device, and more particularly, to a horizontal rotation driving device for large-scale heliostat.

### BACKGROUND

In a solar thermal power generation system, a heliostat is one of the essential parts in the overall power station. As the mirror field has a large footprint and the heliostat is located far from the central collector tower in the mirror field, the heliostat acts to track the position of the sun and reflect sunlight onto the heat receiver of the central collector tower in the mirror field, so that the solar generation system can receive sufficient light energy, thereby increasing the efficiency of power generation. The heliostat generally includes a bracket, a reflective mirror, a rotation driving device, and a device for driving pitching. The horizontal rotation driving device is configured to drive the reflective mirror in horizontal rotation and the device for driving pitching is configured to the drive the reflective mirror in pitching. Existing devices for driving horizontal rotation generally achieve driving through cooperation of a motor and a speed reducer, such as in Chinese Patent CN106766289B, titled DEVICE FOR TRACKING AND CONTROLLING OF HELIOSTAT. In this invention, the heliostat is driven in horizontal rotation by a motor and a worm-and-gear device. This driving device has a disadvantage in that some large-scale heliostats with a heavy reflective plate require a powerful motor in cooperation with a speed reducer or another reduction device of a large reduction ratio in order to generate a sufficient torsion to drive the reflective plate in rotation, which results in a complicated structure and a high manufacture cost for the heliostat.

A horizontal rotation driving device for heliostat disclosed by CN108954861A includes a base and a rotary table. The rotary table is rotatably connected to the base, an eccentric shaft is provided on the base. Three hydraulic cylinders are provided circumferentially on the rotary table, the hydraulic cylinders are rotatably connected to the rotary table, and an outer end of a piston rod of the hydraulic cylinders is rotatably connected to the eccentric shaft. Each of the hydraulic cylinders is connected to the rotary table with two trunnion mounting seats.

### SUMMARY

It is an object of the present invention to overcome the problem in existing large-scale heliostats of requiring a powerful motor in cooperation with a speed reducer or another reduction device of a large reduction ratio in order to generate a sufficient torsion to drive the reflective mirror in rotation, which results in a complicated structure and a high manufacture cost for the heliostat, by providing a horizontal rotation driving device for a large-scale heliostat that is capable of providing a sufficient torsion to drive the reflective mirror in rotation and has a simple structure and a low manufacture cost.

The present invention achieves this object by using the technical solution as follows. A horizontal rotation driving device for a large-scale heliostat includes a base and an upper pedestal, in which the upper pedestal is rotatably connected to the base, an eccentric shaft is provided on the base, the eccentric shaft being deviated from the rotation axis of the upper pedestal; and at least three hydraulic cylinders are provided circumferentially on the upper pedestal, the hydraulic cylinders being rotatably connected to the upper pedestal, a piston rod of the hydraulic cylinders having a front end rotatably connected to the eccentric shaft, in which trunnions are provided symmetrically on both sides of the hydraulic cylinder, a trunnion mounting seat is provided on the upper pedestal, a trunnion hole is provided in the trunnion mounting seat for connection of the trunnions, and a bushing is provided between the trunnion and the trunnion hole, in which the trunnion mounting seat comprises an inner trunnion mounting seat and an outer trunnion mounting seat, the inner trunnion mounting seat and the upper pedestal are integrally molded, the outer trunnion mounting seat is bolted to the inner trunnion mounting seat; the inner trunnion mounting seat is provided with a first half trunnion hole, the outer trunnion mounting seat is provided with a second half trunnion hole corresponding to the first half trunnion hole, the first half trunnion hole and the second half trunnion hole are snap-fitted to each other to form the trunnion hole; and the outer trunnion mounting seat is provided with a sealing cover on the side away from the inner trunnion mounting seat, the sealing cover being fitted over the outer side of the hydraulic cylinder.

In the present invention, the base is mounted on the column of the heliostat and the reflective plate is mounted on the upper pedestal. In the present invention, based on the principle of a radial engine, the upper pedestal is enabled to rotate through the interaction between the hydraulic cylinders and the eccentric shaft, which further drives the reflective plate mounted on the upper pedestal in synchronous rotation. In the present invention, at least three hydraulic cylinders are provided, and thus the uniform force applied to the eccentric shaft is in a more equilibrium state. Whether one or two of the hydraulic cylinders are pushing or pulling, one or two of them always generate an opposing torque, so that less shear force is exerted on the eccentric shaft and the torsion output is increased, thereby improving the reliability and stability of the overall driving mechanism. In the present invention, hydraulic cylinders act as the power component that can output a larger torsion than motors to drive the large-scale reflective plate in rotation. In the present invention, hydraulic cylinders as the essential driving device have a lower cost and a simpler structure compared with motors and speed reducers, resulting in a significantly reduced manufacture cost for the overall heliostat.

Preferably, an inner bearing race is secured to the base, and an outer bearing race is rotatably connected to the outer side of the inner bearing race. Balls are provided between the outer bearing race and the inner bearing race. The upper pedestal is secured to the outer bearing race. As the outer bearing race and the inner bearing race are rotatable relative to each other and the upper pedestal is mounted on the outer bearing race, the upper pedestal and the base are enabled to be rotated relative to each other. Balls provided between the outer bearing race and the inner bearing race can reduce the friction during rotation of the outer bearing race, thereby reducing the frictional resistance during rotation of the upper pedestal.

Preferably, a retaining ring is provided on the base. The eccentric shaft is disposed inside the retaining ring and connected thereto via spokes.

Preferably, an opening is provided at the top of the upper pedestal, and a detachable sealing cap is connected to the opening from above. The opening at the top of the upper pedestal facilitates maintenance inside the upper pedestal. The sealing cap is fitted over the opening to provide sealing and dustproof.

Preferably, a rotary joint is provided at the center of the top of the upper pedestal. The side of the rotary joint facing the inner side of the upper pedestal and the side of the rotary joint facing the outer side of the upper pedestal are both provided with a structure for connection of an oil pipe. The oil pipe may be connected respectively to interfaces at both sides of the rotary joint. In this way, the oil pipe can pass through the upper pedestal. The upper pedestal is rotated relative to the base during operation, and the rotary structure can be rotated to compensate for this rotation. In this way, the oil pipe can be prevented from rotation due to the upper pedestal.

Preferably, a through hole is provided in the eccentric shaft to allow the oil pipe to pass therethrough. As such, the oil pipe can be arranged inside the upper pedestal as much as possible, which provides desirable protection of the oil pipe.

Preferably, the hydraulic cylinder is connected to the trunnion mounting seat via the trunnions provided at both sides. In this way, the hydraulic cylinders can be rotated. The bushing can reduce the frictional resistance between the trunnion and the trunnion hole during rotation.

Preferably, the outer trunnion mounting seat is bolted to the inner trunnion mounting seat, so that the outer trunnion mounting seat can be separated from the inner trunnion mounting seat. When the outer trunnion mounting seat is separated from the inner trunnion mounting seat, the hydraulic cylinder can be mounted or detached. When the outer trunnion mounting seat is connected to the inner trunnion mounting seat, the hydraulic cylinder is secured to the trunnion mounting seat. The sealing cover provides sealing protection of the hydraulic cylinder by being fitted over its outer side.

Preferably, a sealing ring is provided between the bushing and the trunnion hole. An annular groove is provided on an inner annular face of the bushing and has a depth that increases or decreases gradually along the axial direction of the bushing. A sealing collar is provided between the annular groove and the trunnion. A spring is provided between one end of the annular groove and the sealing collar. The spring applies an elastic force to the sealing collar that is directed towards the end of the annular groove of a smaller depth. The sealing ring provides sealing between the bushing and the trunnion hole, and the sealing collar provides sealing between the bushing and the trunnion. Under the action of the elastic force of the spring, the sealing collar is pressed against the side of the annular groove of a smaller depth. In this way, even if wears arise from the relative rotation of the sealing collar and the trunnion, a close contact can be ensured between both sides of the sealing collar and the bottom face of the annular groove and the outer annular face of the trunnion respectively, thereby improving effectively the sealing between the trunnion and the bushing.

Preferably, the annular groove has a section of a right-angled trapezoid shape, and the sealing collar has a section that matches the section of the annular groove. The section of the annular groove is designed as a right-angled trapezoid shape, which facilitates machining.

The present invention has the following beneficial effects. In the present invention, the hydraulic cylinders act as the power component that can output a larger torsion than motors to drive the large-scale reflective plate in rotation. In the present invention, hydraulic cylinders as the essential driving device have a lower cost and a simpler structure compared with motors and speed reducers, resulting in a significantly reduced manufacture cost for the overall heliostat.

### BRIEF DESCRIPTION OF THE DRAWINGS

Fig.1 is a schematic structure view of a device according to the present invention;
Fig. 2 is an exploded view of a hydraulic cylinder in a mounted position according to the present invention;
Fig. 3 is a front view of a device according to the present invention;
Fig. 4 is a sectional view along the direction A-A in Fig. 3;
Fig. 5 is an enlarged view of the portion a in Fig. 4;
Fig. 6 is an enlarged view of the portion b in Fig. 4; and
Fig. 7 is a sectional view along the direction B-B in Fig. 3.

### Reference Numerals

1. base; 2. upper pedestal; 3. sealing cap; 4. rotary joint; 5. outer bearing race; 6. inner trunnion mounting seat; 7. outer trunnion mounting seat; 8. sealing cover; 9. hydraulic cylinder; 10. connection sleeve; 11. trunnion; 12. bushing; 13. eccentric shaft; 14. oil pipe; 15. inner bearing race; 16. ball; 17. retaining ring; 18. sealing ring; 19. annular groove; 20. sealing collar; 21. spring; 22. spoke; 23. connector.

### DESCRIPTION OF THE EMBODIMENTS

The present invention will be further described below by way of specific embodiments and with reference to the accompanying drawings.

### Embodiment:

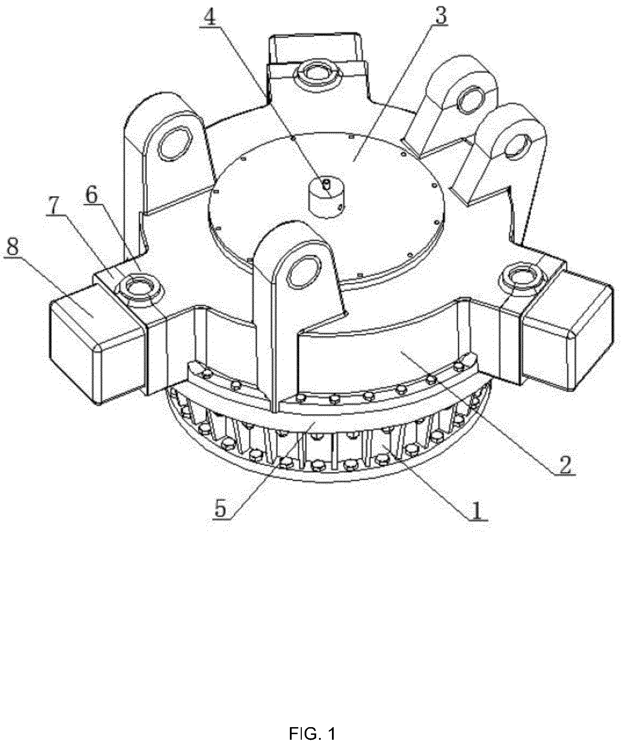

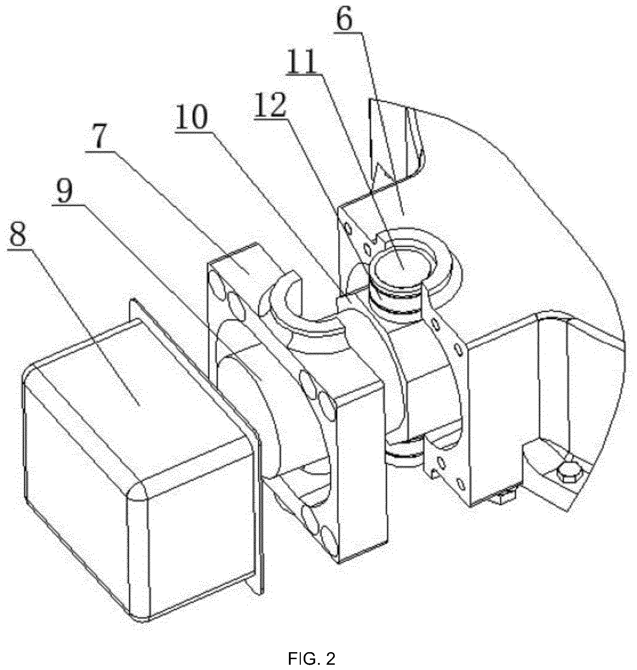

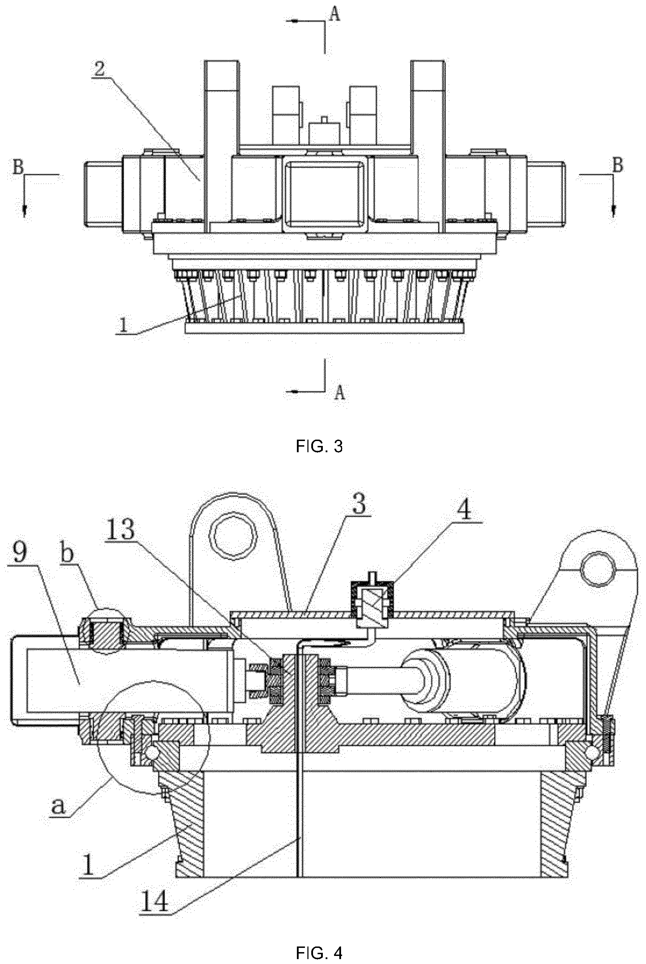

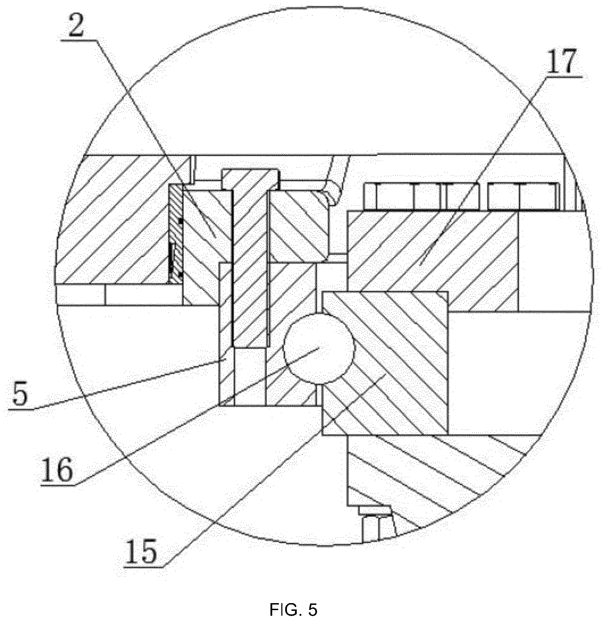

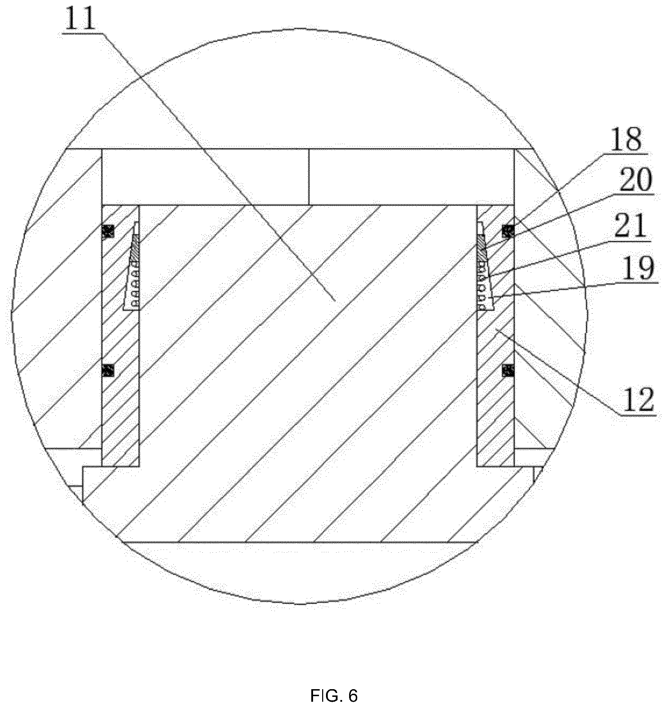

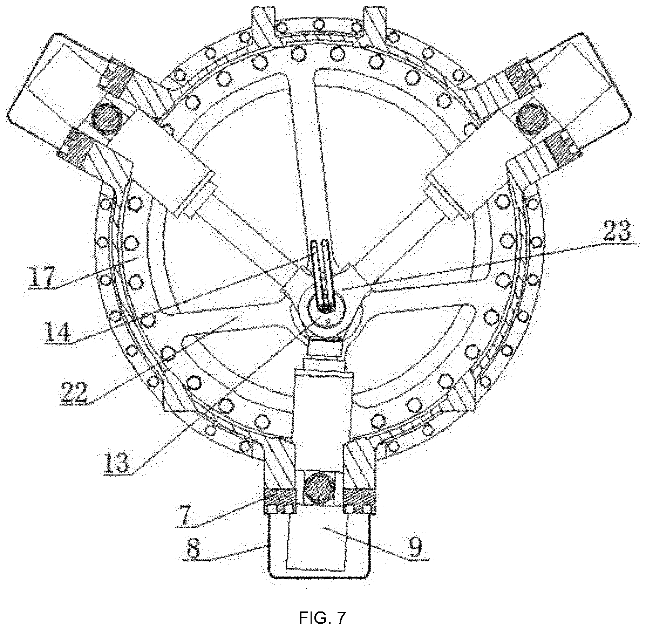

As shown in Figs. 1-7, a horizontal rotation driving device for a large-scale heliostat includes a base 1 and an upper pedestal 2. A lower end of the base 1 is connected to a column. The upper pedestal 2 is rotatably connected to the base 1. An inner bearing race 15 is secured to an upper end of the base 1. The inner bearing race 15 is bolted to the base 1. An outer bearing race 5 is provided outside the inner bearing race 15. The inner bearing race 15 and outer bearing race 5 both have a circular shape. The inner bearing race 15 is provided with an annular-shaped first ball groove on the side towards the outer bearing race 5, and the outer bearing race 5 is provided with a second ball groove corresponding to the first ball groove on the side towards the inner bearing race 15. The first ball groove and second ball groove correspond to each other. Several balls 16 are provided between the first ball groove and second ball groove.

The upper pedestal 2 is secured to the outer bearing race 5. The upper pedestal 2 is bolted to the outer bearing race 5. A retaining ring 17 is provided on the inner bearing race 15. The retaining ring 17 is bolted to the inner bearing race 15. An eccentric shaft 13 is provided inside the retaining ring 17. The eccentric shaft 13 is connected to the retaining ring 17 via spokes 22. The eccentric shaft 13 is deviated from the rotation axis of the upper pedestal 2. A through hole is provided on the eccentric shaft for an oil pipe 14 to pass therethrough. At least three trunnion mounting seats are provided circumferentially on the upper pedestal 2. In this embodiment, three trunnion mounting seats are provided. These trunnion mounting seats are arranged evenly and circumferentially on the upper pedestal 2. A hydraulic cylinder 9 is rotatably connected to each of the trunnion mounting seats. A connection sleeve 10 is provided on each of the hydraulic cylinders 9. The connection sleeve 10 is fitted over the body of the hydraulic cylinder 9. Trunnions 11 are provided symmetrically on both sides of the connection sleeve. The trunnion mounting seat is provided with a trunnion hole corresponding to the trunnion 11. The trunnion 11 is rotatably connected inside the trunnion hole. A bushing 12 is provided between the trunnion 11 and the trunnion hole. The trunnion mounting seat includes an inner trunnion mounting seat 6 and an outer trunnion mounting seat 7. The inner trunnion mounting seat 6 and the upper pedestal 2 are integrally molded. The outer trunnion mounting seat 7 is bolted to the inner trunnion mounting seat 6. The inner trunnion mounting seat 6 is provided with a first half trunnion hole and the outer trunnion mounting seat 7 is provided with a second half trunnion hole corresponding to the first half trunnion hole. The first half trunnion hole and the second half trunnion hole are snap-fitted to form the trunnion hole. The outer trunnion mounting seat 7 is provided with a sealing cover 8 at the side away from the inner trunnion mounting seat 6. The sealing cover 8 is fitted over the outer side of the hydraulic cylinder 9. The outer trunnion mounting seat is bolted to the inner trunnion mounting seat, so that the outer trunnion mounting seat can be separated from the inner trunnion mounting seat. When the outer trunnion mounting seat is separated from the inner trunnion mounting seat, the hydraulic cylinder can be mounted or detached. When the outer trunnion mounting seat is connected to the inner trunnion mounting seat, the hydraulic cylinder is secured to the trunnion mounting seat. The sealing cover provides sealing protection of the hydraulic cylinder by being fitted over its outer side.

An annular sealing ring groove is provided on the outer annular face of the bushing 12. Two sealing ring grooves are provided. The sealing ring grooves are provided axially on the bushing 12 in sequence. A sealing ring 18 is inserted in each of the sealing ring grooves. The sealing rings 18 are mated to the trunnion hole in a sealed manner. An annular groove 19 is provided on the inner annular face of the bushing 12 and has a depth that increases or decreases gradually along the axial direction of the bushing 12. In this embodiment, the annular groove 19 has a section of a right-angled trapezoid shape. A sealing collar 20 is provided between the annular groove 19 and the trunnion 11. The section of the sealing collar 20 matches that of the annular groove 19. A spring 21 is provided between one end of the annular groove 19 and the sealing collar 20. The spring 21 applies an elastic force to the sealing collar 20 that is directed towards the end of the annular groove 19 of a smaller depth. The sealing ring provides sealing between the bushing and the trunnion hole, and the sealing collar provides sealing between the bushing and the trunnion. Under the action of the elastic force of the spring, the sealing collar is pressed against the side of the annular groove of a smaller depth. In this way, even if wears arise from the relative rotation of the sealing collar and the trunnion, a close contact can be ensured between both sides of the sealing collar and the bottom face of the annular groove and the outer annular face of the trunnion respectively, thereby improving effectively the sealing between the trunnion and the bushing.

A connector 23 is secured to the front end of the piston rod of the hydraulic cylinder 9. A shaft hole of the same diameter as the eccentric shaft 13 is provided on the connector. The connector 23 is fitted over the eccentric shaft 13. The connector 23 is rotatably connected to the eccentric shaft 13.

An opening of a circular shape is provided at the top of the upper pedestal 2. A detachable sealing cap 3 is connected to the opening from above. The sealing cap 3 is bolted to the upper pedestal 2. A rotary joint 4 is provided on the sealing cap 3. The rotary joint 4 is positioned at the center of the top of the upper pedestal 2. The side of the rotary joint facing the inner side of the upper pedestal and the side of the rotary joint facing the outer side of the upper pedestal are both provided with an interface for connection of an oil pipe. The oil pipe may be connected respectively to the interfaces at both sides of the rotary joint. In this way, the oil pipe can pass through the upper pedestal. The upper pedestal is rotated relative to the base during operation, and the rotary structure can be rotated to compensate for this rotation. In this way, the oil pipe can be prevented from rotation due to the upper pedestal.

In the present invention, the base is mounted on the column of the heliostat and the reflective plate is mounted on the upper pedestal. In the present invention, based on the principle of a radial engine, the upper pedestal is enabled to rotate through the interaction between the hydraulic cylinders and the eccentric shaft, which further drives the reflective plate mounted on the upper pedestal in synchronous rotation. In the present invention, at least three hydraulic cylinders are provided, and thus the uniform force applied to the eccentric shaft is in a more equilibrium state. Whether one or two of the hydraulic cylinders are pushing or pulling, one or two of them always generate an opposing torque, so that less shear force is exerted on the eccentric shaft and the torsion output is increased, thereby improving the reliability and stability of the overall driving mechanism. In the present invention, hydraulic cylinders act as the power component that can output a larger torsion than motors to drive the large-scale reflective plate in rotation. In the present invention, hydraulic cylinders as the essential driving device have a lower cost and a simpler structure compared with motors and speed reducers, resulting in a significantly reduced manufacture cost for the overall heliostat.

Finally, it should be noted that the above is only the preferred embodiment of the present invention and is not intended to limit the present invention. Although the present invention has been described in detail with reference to the above-mentioned embodiment, it is still possible for those skilled in the art to modify the technical solution disclosed in the above-mentioned embodiment or to make equivalent substitution for some of its technical features.

## Claims

1. A horizontal rotation driving device for large-scale heliostat, comprising a base (1) and an upper pedestal (2), wherein the upper pedestal (2) is rotatably connected to the base (1), an eccentric shaft (13) is provided on the base (1), the eccentric shaft (13) being deviated from a rotation axis of the upper pedestal (2); and at least three hydraulic cylinders (9) are provided circumferentially on the upper pedestal (2), the hydraulic cylinders (9) being rotatably connected to the upper pedestal (2), and a front end of a piston rod of the hydraulic cylinders (9) being rotatably connected to the eccentric shaft (13), wherein trunnions (11) are provided symmetrically on both sides of the hydraulic cylinder (9), a trunnion mounting seat is provided on the upper pedestal (2), a trunnion hole is provided in the trunnion mounting seat for connection of the trunnions (11), **characterized in that** a bushing (12) is provided between the trunnion (11) and the trunnion hole, and **in that,** the trunnion mounting seat comprises an inner trunnion mounting seat (6) and an outer trunnion mounting seat (7), the inner trunnion mounting seat (6) and the upper pedestal (2) are integrally molded, the outer trunnion mounting seat (7) is bolted to the inner trunnion mounting seat (6); the inner trunnion mounting seat (6) is provided with a first half trunnion hole, the outer trunnion mounting seat (7) is provided with a second half trunnion hole corresponding to the first half trunnion hole, the first half trunnion hole and the second half trunnion hole are snap-fitted to each other to form the trunnion hole; and the outer trunnion mounting seat (7) is provided with a sealing cover (8) on the side away from the inner trunnion mounting seat (6), the sealing cover (8) being fitted over the outer side of the hydraulic cylinder (9).

2. The horizontal rotation driving device for large-scale heliostat of claim 1, wherein an inner bearing race (15) is secured to the base (1), an outer bearing race (5) is rotatably connected to the outer side of the inner bearing race (15), balls (16) are provided between the outer bearing race (5) and the inner bearing race (15), and the upper pedestal (2) is secured to the outer bearing race (5).

3. The horizontal rotation driving device for large-scale heliostat of claim 1, wherein a retaining ring (17) is provided on the base (1), the eccentric shaft (13) is disposed inside the retaining ring (17), and the eccentric shaft (13) is connected to the retaining ring (17) via spokes (22).

4. The horizontal rotation driving device for large-scale heliostat of claim 1, wherein an opening is provided at the top of the upper pedestal (1), and a detachable sealing cap (3) is connected to the opening from above.

5. The horizontal rotation driving device for large-scale heliostat of claim 4, wherein a rotary joint (4) is provided at the center of the top of the upper pedestal (2).

6. The horizontal rotation driving device for large-scale heliostat of claim 1, wherein a through hole is provided in the eccentric shaft (13) for an oil pipe (14) to pass therethrough.

7. The horizontal rotation driving device for large-scale heliostat of claim 1, wherein a sealing ring (18) is provided between the bushing (12) and the trunnion hole; an annular groove (19) is provided on an inner annular face of the bushing (12) and has a depth that increases or decreases gradually along an axial direction of the bushing (12), a sealing collar (20) is provided between the annular groove (19) and the trunnion (11), a spring (21) is provided between one end of the annular groove (19) and the sealing collar (20), and the spring (21) applies an elastic force to the sealing collar (20) that is directed towards the end of the annular groove (19) of a smaller depth.

8. The horizontal rotation driving device for large-scale heliostat of claim 7, wherein the annular groove (19) has a section of a right-angled trapezoid shape, and the sealing collar (20) has a section that matches the section of the annular groove (19).

## Patentansprüche

1. Antriebsvorrichtung mit horizontaler Rotation für großen Heliostat, umfassend eine Basis (1) und einen oberen Sockel (2), worin der obere Sockel (2) mit der Basis (1) drehbar verbunden ist, eine Exzenterwelle (13) an der Basis (1) vorgesehen ist, die Exzenterwelle (13) von einer Rotationsachse des oberen Sockels (2) abgelenkt ist; und zumindest drei Hydraulikzylinder (9) umfangsmäßig am oberen Sockel (2) vorgesehen sind, die Hydraulikzylinder (9) mit dem oberen Sockel (2) drehbar verbunden sind, und ein vorderes Ende einer Kolbenstange der Hydraulikzylinder (9) mit der Exzenterwelle (13) drehbar verbunden ist, worin Zapfen (11) symmetrisch an beiden Seiten des Hydraulikzylinders (9) vorgesehen sind, ein Zapfeneinbausitz am oberen Sockel (2) vorgesehen ist, ein Zapfenloch im Zapfeneinbausitz zur Verbindung der Zapfen (11) vorgesehen ist, **dadurch gekennzeichnet, dass** eine Buchse (12) zwischen dem Zapfen (11) und dem Zapfenloch vorgesehen ist, und dass der Zapfeneinbausitz einen inneren Zapfeneinbausitz (6) und einen äußeren Zapfeneinbausitz (7) umfasst, der innere Zapfeneinbausitz (6) und der obere Sockel (2) einstückig geformt sind, der äußere Zapfeneinbausitz (7) mit dem inneren Zapfeneinbausitz (6) geschraubt ist; der innere Zapfeneinbausitz (6) mit einem ersten Halbzapfenloch versehen ist, der äußere Zapfeneinbausitz (7) mit einem zweiten Halbzapfenloch versehen ist, das dem ersten Halbzapfenloch entspricht, das erste Halbzapfenloch und das zweite Halbzapfenloch miteinander verschnappt sind, um das Zapfenloch zu bilden; und der äußere Zapfeneinbausitz (7) mit einer Abdichtungsabdeckung (8) an der Seite versehen ist, die vom inneren Zapfeneinbausitz (6) abgewandt ist, wobei die Abdichtungsabdeckung (8) über der Außenseite des Hydraulikzylinders (9) gesteckt ist.

2. Antriebsvorrichtung mit horizontaler Rotation für großen Heliostat nach Anspruch 1, worin ein innerer Lagerring (15) an der Basis (1) gesichert ist, ein äußerer Lagerring (5) mit der Außenseite des inneren Lagerrings (15) drehbar verbunden ist, Kugeln (16) zwischen dem äußeren Lagerring (5) und dem inneren Lagerring (15) vorgesehen sind, und der obere Sockel (2) am äußeren Lagerring (5) gesichert ist.

3. Antriebsvorrichtung mit horizontaler Rotation für großen Heliostat nach Anspruch 1, worin ein Haltering (17) an der Basis (1) vorgesehen ist, die Exzenterwelle (13) innerhalb des Halteringes (17) angeordnet ist, und die Exzenterwelle (13) mit dem Haltering (17) über Speichen (22) verbunden ist.

4. Antriebsvorrichtung mit horizontaler Rotation für großen Heliostat nach Anspruch 1, worin eine Öffnung am Oberteil des oberen Sockels (1) vorgesehen ist, und eine abnehmbare Abdichtungskappe (3) mit der Öffnung von oben verbunden ist.

5. Antriebsvorrichtung mit horizontaler Rotation für großen Heliostat nach Anspruch 4, worin ein Drehgelenk (4) in der Mitte des Oberteils des oberen Sockels (2) vorgesehen ist.

6. Antriebsvorrichtung mit horizontaler Rotation für großen Heliostat nach Anspruch 1, worin ein Durchgangsloch in der Exzenterwelle (13) vorgesehen ist, damit eine Ölleitung (14) es durchläuft.

7. Antriebsvorrichtung mit horizontaler Rotation für großen Heliostat nach Anspruch 1, worin ein Abdichtungsring (18) zwischen der Buchse (12) und dem Zapfenloch vorgesehen ist; eine ringförmige Nut (19) an einer inneren ringförmigen Fläche der Buchse (12) vorgesehen ist und eine Tiefe hat, die entlang einer axialen Richtung der Buchse (12) allmählich zunimmt oder abnimmt, eine Abdichtungsmanschette (20) zwischen der ringförmigen Nut (19) und dem Zapfen (11) vorgesehen ist, eine Feder (21) zwischen einem Ende der ringförmigen Nut (19) und der Abdichtungsmanschette (20) vorgesehen ist, und die Feder (21) eine Federkraft auf die Abdichtungsmanschette (20) aufbringt, die zu dem Ende der ringförmigen Nut (19) mit einer kleineren Tiefe gerichtet ist.

8. Antriebsvorrichtung mit horizontaler Rotation für großen Heliostat nach Anspruch 7, worin die ringförmige Nut (19) einen Querschnitt mit einer rechtwinkligen trapezförmigen Form hat, und die Abdichtungsmanschette (20) einen Querschnitt hat, der zu dem Querschnitt der ringförmigen Nut (19) passt.

## Revendications

1. Dispositif d'entraînement en rotation horizontale pour héliostat à grande échelle, comprenant une base (1) et un socle supérieur (2), dans lequel le socle supérieur (2) est relié de manière rotative à la base (1), un arbre excentrique (13) est prévu sur la base (1), l'arbre excentrique (13) étant dévié d'un axe de rotation du socle supérieur (2) ; et au moins trois cylindres hydrauliques (9) sont prévus de manière circonférentielle sur le socle supérieur (2), les cylindres hydrauliques (9) étant reliés de manière rotative au socle supérieur (2), et une extrémité avant d'une tige de piston des cylindres hydrauliques (9) étant reliée de manière rotative à l'arbre excentrique (13), dans lequel des tourillons (11) sont prévus de manière symétrique des deux côtés du cylindre hydraulique (9), un siège de montage de tourillon est prévu sur le socle supérieur (2), un trou de tourillon est prévu dans le siège de montage de tourillon pour la connexion des tourillons (11), **caractérisé en ce que**
une douille (12) est prévue entre le tourillon (11) et le trou de tourillon, et **en ce que,** le siège de montage de tourillon comprend un siège de montage de tourillon intérieur (6) et un siège de montage de tourillon extérieur (7), le siège de montage de tourillon intérieur (6) et le socle supérieur (2) sont moulés d'un seul tenant, le siège de montage de tourillon extérieur (7) est boulonné au siège de montage de tourillon intérieur (6) ; le siège de montage de tourillon intérieur (6) est pourvu d'un premier demi-trou de tourillon, le siège de montage de tourillon extérieur (7) est pourvu d'un second demi-trou de tourillon correspondant au premier demi-trou de tourillon, le premier demi-trou de tourillon et le second demi-trou de tourillon sont ajustés par encliquetage l'un à l'autre pour former le trou de tourillon ; et le siège de montage de tourillon extérieur (7) est pourvu d'un couvercle d'étanchéité (8) sur le côté éloigné du siège de montage de tourillon intérieur (6), le couvercle d'étanchéité (8) étant ajusté sur le côté extérieur du cylindre hydraulique (9).

2. Dispositif d'entraînement en rotation horizontale pour héliostat à grande échelle selon la revendication 1, dans lequel une bague de palier intérieure (15) est fixée à la base (1), une bague de palier extérieure (5) est reliée de manière rotative au côté extérieur de la bague de palier intérieure (15), des billes (16) sont prévues entre la bague de palier extérieure (5) et la bague de palier intérieure (15), et le socle supérieur (2) est fixé à la bague de palier extérieure (5).

3. Dispositif d'entraînement en rotation horizontale pour héliostat à grande échelle selon la revendication 1, dans lequel une bague de retenue (17) est prévue sur la base (1), l'arbre excentrique (13) est disposé à l'intérieur de la bague de retenue (17), et l'arbre excentrique (13) est relié à la bague de retenue (17) par l'intermédiaire de rayons (22).

4. Dispositif d'entraînement en rotation horizontale pour héliostat à grande échelle selon la revendication 1, dans lequel une ouverture est prévue au sommet du socle supérieur (1), et un capuchon d'étanchéité amovible (3) est relié à l'ouverture par le haut.

5. Dispositif d'entraînement en rotation horizontale pour héliostat à grande échelle selon la revendication 4, dans lequel un joint rotatif (4) est prévu au centre du sommet du socle supérieur (2).

6. Dispositif d'entraînement en rotation horizontale pour héliostat à grande échelle selon la revendication 1, dans lequel un trou traversant est prévu dans l'arbre excentrique (13) pour qu'un tuyau d'huile (14) le traverse.

7. Dispositif d'entraînement en rotation horizontale pour héliostat à grande échelle selon la revendication 1, dans lequel une bague d'étanchéité (18) est prévue entre la douille (12) et le trou de tourillon ; une rainure annulaire (19) est prévue sur une face annulaire interne de la douille (12) et a une profondeur qui augmente ou diminue progressivement le long d'une direction axiale de la douille (12), un collier d'étanchéité (20) est prévu entre la rainure annulaire (19) et le tourillon (11), un ressort (21) est prévu entre une extrémité de la rainure annulaire (19) et le collier d'étanchéité (20), et le ressort (21) applique une force élastique au collier d'étanchéité (20) qui est dirigée vers l'extrémité de la rainure annulaire (19) d'une profondeur plus petite.

8. Dispositif d'entraînement en rotation horizontale pour héliostat à grande échelle selon la revendication 7, dans lequel la rainure annulaire (19) a une section de forme trapézoïdale à angle droit, et le collier d'étanchéité (20) a une section qui correspond à la section de la rainure annulaire (19).
